Europäisches Patentamt

European Patent Office

Office européen des brevets

(11) Numéro de publication: **0 214 020**
**A1**

## (12) DEMANDE DE BREVET EUROPEEN

(21) Numéro de dépôt: **86401729.8**

(22) Date de dépôt: **01.08.86**

(51) Int. Cl.4: **H 04 L 1/16**

(30) Priorité: **02.08.85 FR 8511888**

(43) Date de publication de la demande:
**11.03.87  Bulletin  87/11**

(84) Etats contractants désignés: **DE GB NL SE**

(71) Demandeur: **LMT RADIO PROFESSIONNELLE**
**46-47, Quai Alphonse Le Gallo**
**F-92103 Boulogne-Billancourt (FR)**

(72) Inventeur: **Blondel, Robert**
**THOMSON-CSF SCPI 19, avenue de Messine**
**F-75008 Paris (FR)**

**Cautain, Simon**
**THOMSON-CSF SCPI 19, avenue de Messine**
**F-75008 Paris (FR)**

**Judeinstein, André**
**THOMSON-CSF SCPI 19, avenue de Messine**
**F-75008 Paris (FR)**

**Monneret, Pierre**
**THOMSON-CSF SCPI 19, avenue de Messine**
**F-75008 Paris (FR)**

**Pfileger, Gérard**
**THOMSON-CSF SCPI 19, avenue de Messine**
**F-75008 Paris (FR)**

(74) Mandataire: **Chaverneff, Vladimir et al**
**THOMSON-CSF SCPI 19, avenue de Messine**
**F-75008 Paris (FR)**

(54) **Procédé de transmission de données par paquets à travers un réseau ou une chaine de transmission, et dispositif de mise en oeuvre.**

(57) Le procédé de transmission de paquets de l'invention consiste à transmettre d'abord la totalité d'un paquet, puis à transmettre sélectivement les trames non acquittées de ce paquet. L'acquittement est mémorisé dans une mémoire spécifique (8) qui est adressée en même temps que la mémoire de données (6, 7).

Application : transmission de données.

FIG_1

EP 0 214 020 A1

## Description

PROCEDE DE TRANSMISSION DE DONNEES PAR PAQUETS A TRAVERS UN RESEAU OU UNE CHAINE DE TRANSMISSION, ET DISPOSITIF DE MISE EN OEUVRE

La présente invention se rapporte à un procédé de transmission de données par paquets à travers un réseau ou une chaîne de transmission, ainsi qu'à un dispositif de mise en oeuvre de ce procédé.

Pour transmettre des données par paquets sur un réseau ou une chaîne de transmission, on utilise souvent un protocole de transmission HDLC. Le trajet de transmission peut comporter de nombreuses liaisons différentes : liaisons téléphoniques, hertziennes, par satellites, etc... Certaines de ces liaisons, telles que les liaisons par ondes radio sont souvent de mauvaise qualité, d'autres, telles que les liaisons par satellite présentent des retards de transmission importants. L'utilisation du protocole HDLC oblige à retransmettre toutes les trames d'un paquet tant que l'une d'elles n'est pas acquittée, ce qui peut augmenter considérablement le temps de transmission d'un paquet.

La présente invention a pour objet un procédé de transmission sur liaison duplex de données par paquets formés de trames permettant d'assurer leur transmission le plus rapidement possible, même lorsque la chaîne de transmission comporte de liaisons de mauvaise qualité. La présente invention a également pour objet un dispositif permettant de mettre en oeuvre ce procédé.

Le procédé de transmission de l'invention est essentiellement caractérisé par le fait que l'on transmet d'abord la totalité d'un paquet, et qu'on transmet ensuite sélectivement les trames non acquittées de ce paquet, le récepteur n'acquittant que les trames reçues bonnes.

Selon un aspect avantageux du procédé de l'invention, pour augmenter au maximum la probabilité, pour l'émetteur, de recevoir bonnes les trames d'acquittement envoyées par le terminal destinataire, on utilise à plein temps le canal de retour de la liaison duplex pour renvoyer plusieurs fois la même trame d'acquittement correspondant à une trame de données reçue bonne.

Le dispositif de mise en oeuvre de l'invention comporte, dans l'émetteur et dans le récepteur de données, un calculateur de commande, tel qu'un microprocesseur, relié à une mémoire de données et à une mémoire de programme, ainsi qu'à un circuit générateur ou récepteur, selon le cas, de trames HDLC, relié à un circuit d'émission ou de réception, respectivement, l'émetteur comportant en outre une mémoire d'acquittement adressée par le même pointeur que la mémoire de données à émettre, et le récepteur comportant en outre une mémoire de status adressée par le même pointeur que la mémoire de données reçues.

La présente invention sera mieux comprise à la lecture de la description détaillée d'un mode de réalisation, pris comme exemple non limitatif et illustré par le dessin annexé sur lequel :

- la figure 1 est un bloc-diagramme simplifié d'un émetteur de données conforme à l'invention ;

- la figure 2 est un bloc-diagramme simplifié d'un récepteur de données conforme à l'invention.

La description ci-dessous est faite en référence à l'utilisation de circuits HLDC, mais il est bien entendu que l'on pourrait utiliser des circuits fonctionnant avec d'autres formats de trames.

Le dispositif de transmission de données par paquets décrit ci-dessus assure la transmission entre un terminal origine, ou émetteur, et un terminal destinataire, ou récepteur. Ces deux terminaux étant reliés par une connexion réseau duplex, il est bien entendu que leurs rôles peuvent être inversés lorsque le terminal destinataire envoie des données. Cette connexion duplex peut comporter des tronçons très divers : circuits de commutation, liaisons par fil, faisceaux hertziens, liaisons par satellite ou radio, liaisons par fibres optiques, etc...

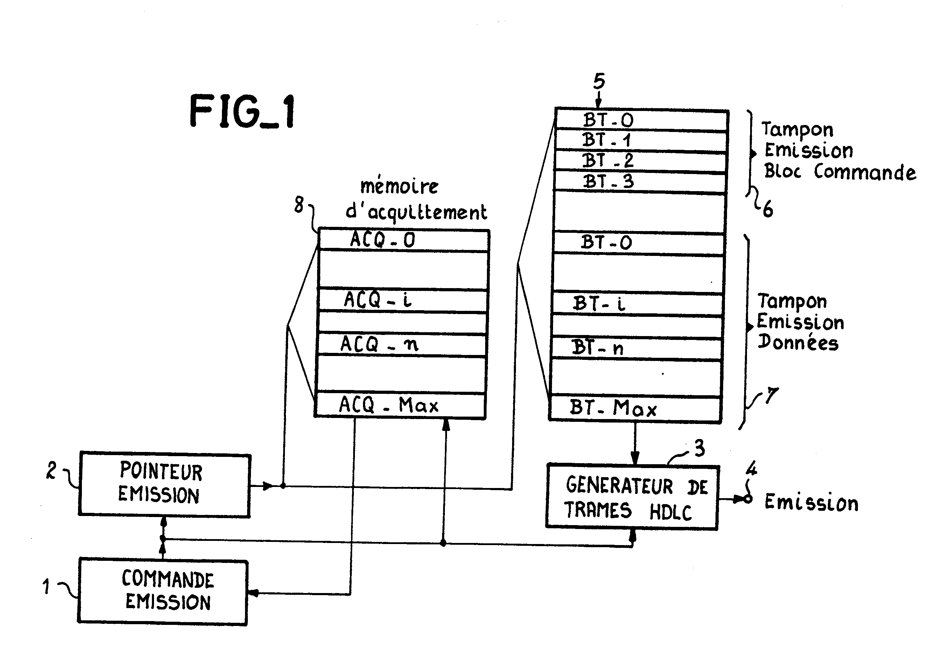

Le terminal émetteur, schématiquement représenté sur la figure 1, comporte un circuit 1 de commande d'émission, qui peut être un séquenceur ou un microprocesseur avec sa mémoire de programme, et qui commande un pointeur d'émission 2 qui peut être un simple registre, et un générateur de trames HDLC, référencé 3, et qui est avantageusement un circuit intégré du commerce. La sortie du générateur 3 est reliée à une borne 4, qui est elle-même reliée à des circuits d'émission appropriés (non représentés), pouvant par exemple comporter un modem et des circuits de liaison à un réseau téléphonique.

Le pointeur 2 adresse une mémoire de données 5, qui est une mémoire vive, dont une zone 6 est un tampon d'émission du bloc de contrôle, et dont une zone 7 est un tampon d'émission de données. En outre, le pointeur 2 adresse une mémoire d'acquittement 8. L'adressage du tampon de données 7 dépend en fait du contenu de la mémoire d'acquittement 8, comme expliqué ci-dessous.

Le terminal récepteur comporte une borne 9 de réception de données, qui est reliée en amont à des circuits récepteurs appropriés (non représentés), par exemple un récepteur de faisceaux hertziens. L'entrée d'un circuit 10 récepteur de trames HDLC est reliée à la borne 9. Sa sortie est reliée d'une part à un circuit 11 de commande de réception, qui peut être un microprocesseur, d'autre part à un circuit 12 d'indication de numéro de trame reçue, qui peut être constitué d'un registre, et enfin à une mémoire 13 comportant une zone 14 qui est un tampon de réception de bloc de contrôle et une zone 15 qui est un tampon de réception de données. Le circuit 12 adresse la mémoire 13, et il adresse en particulier le tampon 15 en fonction du contenu d'une mémoire de status 17 qu'il adresse cycliquement, comme expliqué ci-dessous.

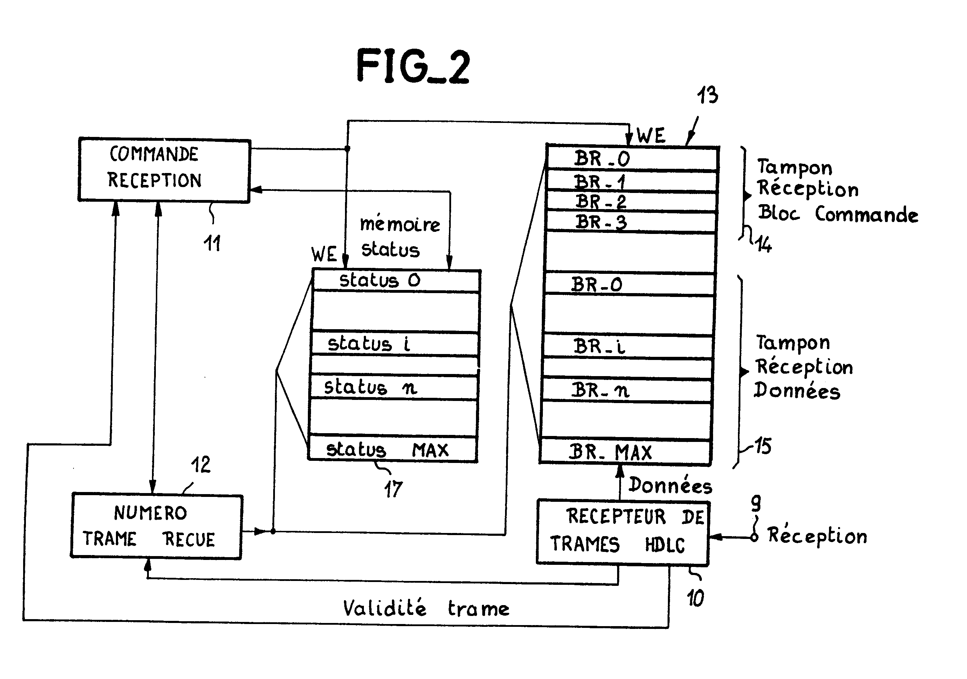

On va expliquer ci-dessous la transmission de données dans un sens, d'un terminal émetteur vers un terminal récepteur, étant bien entendu que les rôles de ces terminaux peuvent être inversés, et que le second envoie alors des données vers le premier selon le même procédé. Bien entendu, chaque terminal comporte un circuit émetteur tel que celui de la figure 1 et un circuit récepteur tel que celui de la figure 2.

L'établissement d'une connexion réseau duplex est fait à l'initiative du terminal origine lorsque celui-ci veut transmettre des données vers un terminal destinataire. Lors de la phase d'établissement, le terminal origine détermine si la connexion réseau emprunte au moins un tronçon radio, ou un tronçon à fort taux d'erreur, c'est-à-dire un tronçon pour lequel on suppose que la qualité de liaison est généralement la moins favorable. Cette détermination peut par exemple résulter du numéro d'appel du destinataire qui implique que l'on passe obligatoirement par une liaison radio. Au cas où cette détermination ne peut être effectuée, le terminal origine suppose qu'il y a une liaison radio.

Les messages produits par les terminaux sont émis par paquets, chaque paquet comportant un maximum de 256 trames. Un paquet ne peut être émis que si le paquet précédent a été acquitté par le destinataire.

Les trames sont soit des trames de commande, soit des trames de données. Les trames de commande sont de différents types : prêt à émettre, prêt à recevoir, demande de paquet suivant ou demande de répétition.

Une trame est généralement composée d'un octet d'en-tête (par exemple : 0111 1110), d'un octet de numéros de trame (le numéro de trame correspond au numéro de bloc de données à transmettre), d'un octet de type de trame, d'un bloc de données utiles, et de deux octets de contrôle de validité de trame.

Le nombre d'octets consacrés au bloc de données utiles est constant durant une transmission. Ce nombre est déterminé en début de transmission, comme précisé ci-dessus. S'il y a au moins un tronçon radio ou un tronçon à fort taux d'erreur, ou par défaut, le bloc de données utiles comporte 4 octets. S'il n'y a pas de tronçon radio, le bloc est fixé à 12 octets. S'il s'agit d'une trame d'acquittement, le bloc de données utiles est nul.

Les trames de commande "prêt à émettre" contiennent les informations de commande suivantes concernant les données à transmettre : nombre total de paquets à émettre, numéro courant du paquet de données, nombre d'octets utiles du paquet de données, nombre d'octets utiles par bloc, ainsi que des informations complémentaires (type de données ou vitesse de transmission par exemple) et un bloc de contrôle de validité du paquet de commande.

Les trames de commande de "prêt à recevoir" contiennent les informations de contrôle en retour du "prêt à émettre", à savoir : nombre total de paquets pouvant être reçus, ou, par défaut, retour du nombre total de paquets indiqué par l'émetteur, numéro courant du paquet de données, des informations complémentaires (type de terminal destinataire ou vitesses de transmission possibles par exemple), et un compte-rendu d'acquittement du "prêt à émettre".

La trame de commande "demande de paquet suivant" fait suite à la réception d'un paquet accepté par le terminal destinataire, et la trame de commande de "demande de répétition de paquet" fait suite à la réception d'un paquet erroné et peut contenir, le cas échéant, le numéro du paquet refusé.

On notera que lorsqu'il n'y a ni trames de données, ni trame de commande à transmettre, l'émetteur émet le code "repos" qui ne doit pas imiter une structure de trame.

Le contrôle de validité de trame utilise un code détecteur d'erreurs sur toute la trame, à l'exception de l'en-tête. Ce code utilise, de préférence, le polynôme générateur normalisé CCITT :
$$x^{16} + x^{12} + x^5 + 1$$

Dans l'émetteur de données, le terminal comporte, comme représenté sur la figure 1, un tampon d'émission (6, 7) qu'il charge avec le paquet courant de données ou le paquet de commande à transmettre. La structure de rangement ordonné des octets du tampon émission permet de découper le paquet en question en blocs à transmettre (BTO, BT1,..., BTn). Le nombre maximal de blocs d'un paquet est, dans le cas présent, de 256 (BT-MAX). On associe, dans la mémoire d'acquittement (8), à chaque bloc l'information d'acquittement (ACQ-0, ... ACQn) reçue du terminal destinataire, la relation ACQi à BTi (i quelconque) étant bijective.

Le terminal destinataire comporte, comme représenté sur la figure 2, un tampon réception (14, 15) dont la structure de rangement ordonné des octets reçus permet de ranger les blocs reçus (BRO, BRI, ..., BRn) correspondant aux trames acceptées. La mémoire de status (17) permet d'associer à chaque bloc reçu un status indiquant, par exemple :
- status = 0 : bloc attendu mais jamais reçu ;
- status = 1 : bloc reçu bon au moins une fois et trame d'acquittement transmise une fois ;
- status = 2 : bloc reçu bon au moins une fois, trame d'acquittement transmise deux fois ;
- status = 3 : bloc reçu bon au moins une fois, trame d'acquittement transmise trois fois.

On va maintenant décrire un exemple de fonctionnement du dispositif de l'invention pour une procédure complète de transmission.

Les terminaux origine et destinataire étant alimentés et prêts à fonctionner, ils émettent le code de "repos". Pour débuter une transmission, ils vont échanger des paquets de commande.

Le terminal origine transmet cycliquement, successivement et consécutivement les trames de données du paquet de "prêt à émettre", et il se place en attente de "prêt à recevoir". Le terminal destinataire attend le "prêt à émettre" et émet le "prêt à recevoir" dès que son tampon de réception est initialisé. Ce tampon est initialisé lorsque les données utiles précédentes ont été traitées par le terminal destinataire et que celui-ci a remis à zéro les variables de status associées à chacun des blocs reçus. Le terminal destinataire transmet le "prêt à recevoir" par émission cyclique, successive et consécutive des blocs de données correspondants.

Après cette procédure, peut avoir lieu la transmission des blocs d'un paquet de données. Le terminal origine, après réception de la trame "prêt à recevoir", arrête l'émission du "prêt à émettre", charge les blocs de données à émettre dans le tampon émission et remet à zéro la variable ACQi correspondante, calcule le bloc de contrôle du paquet, et transmet cycliquement, successivement et consécutivement tous les blocs non acquittés par des trames d'acquittement émises par le terminal destinataire.

Lorsqu'une trame est reçue bonne pour la première fois, le terminal destinataire transmet en écho vers le terminal origine une trame "acquittement" porteuse du même numéro. Le bloc correspondant est rangé dans le tampon réception 15, puis une information status = 1 est placée dans la mémoire 17 avec un numéro correspondant à ce bloc.

Sauf dans le cas de la première trame reçue, lorsqu'une trame est détectée fausse, le terminal destinataire dispose d'un temps supplémentaire pour répéter des trames "acquittement" de trames reçues puisqu'il n'a pas à renvoyer de trame "d'acquittement négatif" sur réception d'une trame fausse. La trame d'acquittement étant plus courte qu'une trame de données, on peut renvoyer vers l'émetteur des trames d'acquittement déjà envoyées. La trame d'acquittement répétée est soit continûment la dernière trame d'acquittement, soit trois fois de suite la dernière trame d'acquittement, puis les acquittements de plus proche antériorité lorsque ceux-ci n'ont pas été transmis trois fois. Les status correspondants passent alors en 2 ou 3.

Lorsqu'une trame est à nouveau reçue bonne, les données correspondantes sont ignorées. Une trame d'acquittement est alors émise et le status est replacé en 1.

Le terminal origine enregistre l'acquittement (par exemple en forçant ACQi à 1) chaque fois qu'une trame d'acquittement de numéro correspondant est reçue bonne. Les trames ainsi acquittées ne sont plus réémises.

Une fois la transmission d'un paquet effectuée, c'est-à-dire dès que l'ensemble des blocs à transmettre a été acquitté, les terminaux peuvent procéder à un échange de paquets de commande.

Dès qu'il considère que le paquet a été complètement transmis, le terminal origine transmet le code "repos". Lorsque le terminal destinataire a reçu la totalité du paquet c'est-à-dire si toutes les trames attendues ont un status supérieur ou égal à 1, il contrôle sa validité à l'aide du bloc de commande de paquet correspondant. Si le paquet est accepté, le terminal destinataire traite les données, puis transmet le code "repos". Si le paquet est refusé, le terminal destinataire transmet la trame "demande de répétition de paquet", annule le paquet, réinitialise le tampon réception, et se place en position de réception de "prêt à émettre". La transmission du même paquet est reprise à son début selon la procédure décrite ci-dessus.

Lorsque le terminal destinataire a traité les données reçues du paquet courant, il réinitialise son tampon réception, transmet la trame "demande de paquet suivant" et se place en position de réception de "prêt à émettre". La transmission éventuelle du paquet suivant est reprise selon la procédure décrite ci-dessus. Le terminal destinataire transmet les trames de commande "demande de répétition de paquet" ou "demande de paquet suivant", selon le cas, par émission cyclique, successive, et consécutive des blocs de données correspondants.

**Revendications**

1. Procédé de transmission de données par paquets formés de trames à travers un réseau ou une chaîne de transmission à liaison duplex, caractérisé par le fait que l'on transmet d'abord la totalité d'un paquet, et que l'on transmet ensuite sélectivement les trames non acquittées de ce paquet, le récepteur n'acquittant que les trames reçues bonnes.

2. Procédé selon la revendication 1, caractérisé par le fait que pour augmenter au maximum la probabilité, pour l'émetteur, de recevoir bonnes les trames d'acquittement envoyées par le terminal destinataire, on utilise à plein temps le canal retour de la liaison duplex pour renvoyer plusieurs fois la même trame d'acquittement correspondant à une trame de données reçue bonne.

3. Procédé selon la revendication 1 ou 2, utilisant un format de trame dérivé du HLDC, caractérisé par le fait qu'une trame comporte un octet d'en-tête, un octet de numéro de trame, un octet de type de trame, quatre ou douze octets de données appelés bloc de données utiles, s'il y a lieu, selon que la liaison comporte ou non au moins un tronçon à taux d'erreur élevé tel qu'une transmission par radio, et deux octets de contrôle de validité de trame, ainsi qu'un octet de fin de trame.

4. Procédé selon l'une des revendications 1 à 3, caractérisé par le fait que les paquets de commande "prêt à émettre" contiennent des informations concernant : le nombre total de paquets de données du message, le numéro courant du paquet de données, le nombre d'octets utiles du paquet de données, le nombre d'octets utiles par bloc de données, et le bloc de contrôle de validité du paquet de commande.

5. Procédé selon la revendication 4, caractérisé par le fait que le paquet de commande "prêt à émettre" contient en plus des informations complémentaires telles que celles relatives au type de données transmises, ou à la vitesse de transmission.

6. Procédé selon l'une quelconque des revendications précédentes, caractérisé par le fait que le paquet de commande "prêt à recevoir" contient des informations concernant : le nombre total de paquets pouvant être reçus, ou par défaut, retour du nombre total de paquets indiqué par l'émetteur, le numéro courant du paquet de données, le compte rendu d'acquittement du "prêt à émettre".

7. Procédé selon la revendication 6, caractérisé par le fait que le paquet de commande "prêt à recevoir" contient en plus des informations complémentaires telles que celles relatives au type de terminal destinataire, ou aux vitesses de transmission possibles.

8. Procédé selon l'une quelconque des revendications précédentes, caractérisé par le fait que l'on range les données de commande et les données utiles d'un paquet en blocs dans des tampons du terminal origine et du terminal destinataire, que l'on associe, dans le terminal origine, chaque bloc à une information d'acquittement, et que l'on associe dans le terminal destinataire chaque bloc à une information de status, et par le fait qu'après avoir transmis un paquet en entier, on explore lesdites informations d'acquittement pour ne retransmettre que les blocs auxquels ne correspond pas d'information d'acquittement.

9. Dispositif de transmission de messages par paquets à travers un réseau ou un chaîne de transmission comportant, dans l'émetteur et dans le récepteur de messages, un calculateur de commande tel qu'un microprocesseur, relié à une mémoire de données et à une mémoire de programme, ainsi qu'à un circuit générateur ou récepteur, selon le cas, de trames HDLC relié à un circuit d'émission ou de réception, respectivement, caractérisé par le fait que l'émetteur comporte en outre une mémoire d'acquittement (8) adressée par le même pointeur (2) que la mémoire de données à émettre (6, 7), et que le récepteur comporte en outre une mémoire de status (17) adressée par le même pointeur (12) que la mémoire de données reçues (14, 15).

– Leerseite –

FIG_1

# FIG_2

COMMANDE RECEPTION — 11

mémoire status

WE

status 0
status i
status n
status MAX — 17

NUMERO TRAME RECUE — 12

WE — 13

BR_0
BR-1
BR-2
BR-3

Tampon Réception Bloc Commande — 14

BR_0

BR_i

BR_n

BR_MAX — 15

Tampon Réception Données

Données

RECEPTEUR DE TRAMES HDLC — 10

9 — Réception

Validité trame

86401729

Office européen
des brevets

# RAPPORT DE RECHERCHE EUROPEENNE

Numero de la demande

EP 86 40 1729

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| A | EP-A-0 046 831 (IBM)<br><br>* Page 5, lignes 10-12; page 6, lignes 14-17; page 15, ligne 30 - page 16, ligne 2; page 19, lignes 3-8; page 7, lignes 5-21; page 20, lignes 3-6; page 23, lignes 7-9; page 24, lignes 27-35 *<br>--- | 1,3-7, 9 | H 04 L 1/16 |
| A | EP-A-0 055 404 (BUNKER RAMO)<br>* Page 7, lignes 8-15; page 11, lignes 14-18 *<br>--- | 1,3,9 | |
| A | C. MACCHI et al.:<br>"Téléinformatique", 1983, chapitre 4, pages 144-172, Dunod, Paris, FR; "Protection contre les erreurs en téléinformatique"<br>* Page 168, dernier paragraphe *<br><br>----- | 1 | |

DOMAINES TECHNIQUES RECHERCHES (Int Cl 4)

H 04 L

Le présent rapport de recherche a été établi pour toutes les revendications

| Lieu de la recherche<br>LA HAYE | Date d'achèvement de la recherche<br>13-10-1986 | Examinateur<br>GEISLER J.A.R. |
|---|---|---|